# EUROPEAN PATENT APPLICATION

(11) **EP 2 584 416 A2**
(43) Date of publication of application: **24.04.2013**
(21) Application number: 12004815.2
(22) Date of filing: 27.06.2012
(51) Int. Cl.: G05B 19/042, F24C 15/10, F24C 15/16

(54) **Multiprobe cooking system in an equipment for cooking food**

(30) Priority: 18.10.2011 IT TV20110142
(71) Applicant: Lainox Ali Spa, 31029 Vittorio Veneto (TV) (IT)
(72) Inventor: Lazzer, Natalino, 31029 Vittorio Veneto (TV) (IT)
(74) Representative: Osti, Biancamaria

(57) **Abstract**

Cooking system in a multiprobe cooking equipment for food, within the cooking chamber, there are at least two control pins, each marked, in which a first end connected the control system of cooking equipment and the second end tucked into the food to be cooked, so that the temperatures recorded by each pin are processed by said control system equipment to alert the user through the interface, the achievement of core temperature set for those foods, being able to cook multiple products with different firing temperatures to the heart or more of the same product, with the same cooking temperature to the heart, but of different sizes.

## Description

This invention relates to a multiprobe cooking system, applicable to ovens for cooking food for the foodservice industry, such as ovens for catering and large kitchens, and includes an electrical or gas oven of the convection or mixed type for cooking food.

### Field of the invention

In the catering industry there is the proven need to resort to equipment for cooking food, such as ovens, which on the one side have good thermal efficiency for faster and more uniform cooking minimizing consumptions, but on the other side are above all able to ensure in a single integrated oven, a good versatility of use depending on the growing and variable needs of the chef, such as the fact to be able to choose whether to roast, braise, grill or brown the food being cooked, and the like, not excluding the possibility to simultaneously process kinds of food that are different by nature and size.

In principle these functions are entrusted to the logical unit of the oven, which operates in such a way as to make some values detected inside the cooking chamber interact with other values, selected by the manufacturer, which allows to obtain some preset cooking modes with good quality. Moreover, it must be added that the currently existing ovens integrate or make use of auxiliary devices able to offer also simultaneously other cooking modes, such as the steam cooking function.

At present the oven equipment works in order to end cooking once the temperature at the heart of the product to be cooked has been reached, temperature that has been previously set through the interface of the control board and that is detected through a control probe preset by the user of the oven.

Normally the control probe consists of a single pin-like body with a detection system of the single-point and multi-point type. The single-point pin contains a thermocouple or a thermistor that interfaces with the control system of the oven, the multi-point pin contains several acquisition thermocouples placed along its shaft in order to have a more precise reading of the temperature at the heart of the product and if necessary correlate the temperatures among each other for deeper analyses.

Multilevel cooking/regeneration is also known. It is a particular option that allows to manage the cooking/regeneration time or temperature at the heart of the food of each single pan, placed at different levels with respect to each other on the oven rack. Notoriously, an oven for the foodservice industry, such as gas-convection, steam, mixed or even electrical ovens, includes a capacious cooking/regeneration chamber, inside which, by means of an access door, some pans are positioned over each other, where each pan positioned at a level different from the other with respect to the bottom of the cooking/regeneration chamber, is suitable to contain the food to be cooked or regenerated. Such cooking/regeneration will be subordinated and bound by the setting of the type of cooking/regeneration, which will have to be homogenous for the food inserted in the various levels. In this case the use of a probe is provided in such a way that the sensor can detect the temperature at the heart of the food to be cooked/regenerated.

At present the use of a single probe does not allow for a precise control of all the food, aside from nature and size, contained in the cooking chamber, all the more so in equipment that allows for multilevel cooking. At the moment any earlier document that illustrates a solution able to solve the mentioned drawback is not reasonably known to the applicant.

### Short description of the object of the invention

This and other aims are achieved by the present invention according to the characteristics as in the included claims by means of a multiprobe cooking system in a cooking equipment for food, in which inside the cooking chamber there are at least two control pins, each marked, and at a first end connected to the control system of the cooking equipment and with the second end tucked into the food to be cooked, in such a way that the temperatures detected by each pin are processed by said control system of the equipment in order to signal to the user, through the interface, that the temperature at the heart set for said food has been reached, being able to cook simultaneously several products with different cooking temperatures at the heart or several pieces of the same product, having the same cooking temperature at the heart, but of different sizes.

### Advantages

These, and other advantages will appear from the following detailed description of a preferred embodiment with the aid of the enclosed schematic drawings whose details of execution are not to be considered limitative but only illustrative. More particularly, an aim consists in being able to set the cooking temperatures at the heart of the various products or the same temperature for the various pieces. In practice, in the same cooking, with the same modes and the same working temperature in the cooking chamber, several products can be cooked simultaneously with different cooking temperatures at the heart or several pieces of the same product (same cooking temperature at the heart) of different sizes.

### Content of the drawings

Fig. 1 setting interface of the cooking temperatures at the heart of the various food products
Fig. 2 setting interface of the same cooking temperature at the heart for the various pieces;
Fig. 3 setting interface of the temperatures for multilevel cooking.

### Practical embodiment of the invention

In the multiprobe cooking system of the present invention, which is used in an equipment for cooking food, of the type provided with a cooking chamber, the number of the products to be cooked is linked to the number of probes in the form of pins (110, 120, 130, 140), present and used to be connected and dialogue with the control system of the equipment. Said probes, (110, 120, 130, 140) can be marked by a number or by a colour and viewed by the control system of the cooking equipment through an interface, for example a graphical interface (100).

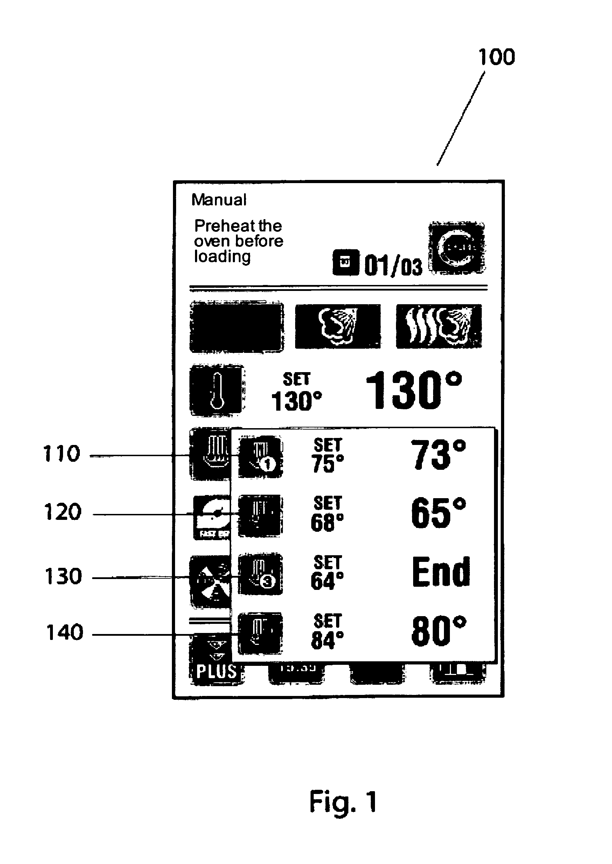

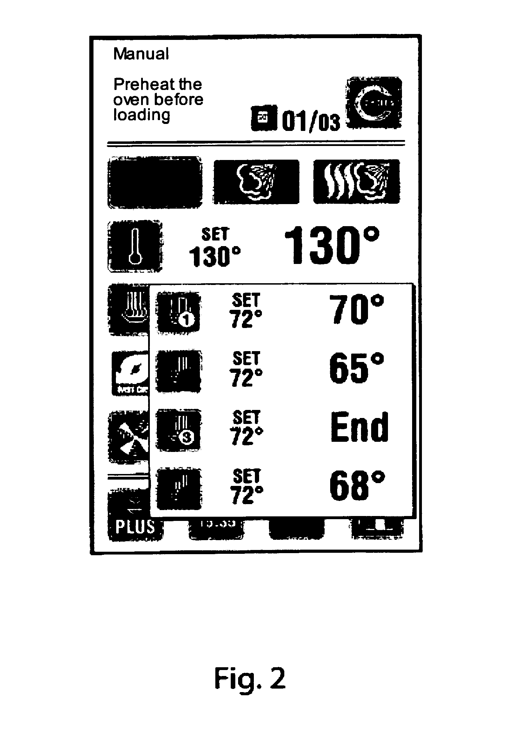

In a possible embodiment (Fig. 1 and Fig. 2) 4 probes (110, 120, 130, 140) are provided, therefore one can cook or control up to four different products or four different pieces of the same product.

The temperatures detected by each probe at the heart (110, 120, 130, 140) are processed in order to signal to the user, through the interface (100), that the temperature at the heart set for the various products or for the different pieces has been reached.

In traditional cooking, once the cooking modes and the working temperature in the cooking chamber have been set, one can set the cooking temperatures at the heart of the various products (Fig. 1) or the same temperature for the various pieces (Fig. 2) up to a number corresponding to that of the connected probes. The equipment, through the interface (100), will communicate in sequence to the user that the temperature for the various products or for the various pieces has been reached in order to allow their withdrawal. When the temperature of the last product/piece has been reached, the equipment will end the cooking cycle.

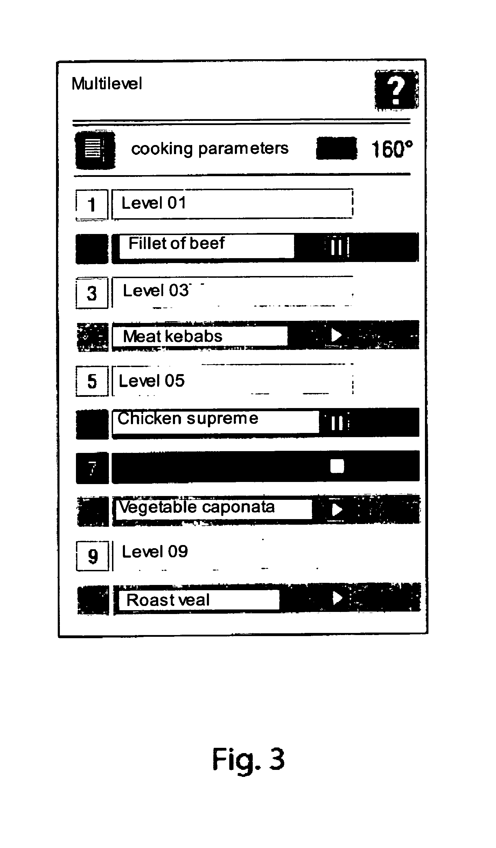

The use of the described system is double, as has been described above in case of traditional cooking or in combination with the multilevel system. In combination with the multilevel system, one can set with the control of the "probe at the heart" type a number of levels equal to the number of probes (110, 120, 130, 140) connectable to the control system of the equipment. The levels will be controlled individually and for each it will be signalled when the temperature at the heart of the product has been reached (fig. 3). In this case the equipment will work continuously with the preset modes and temperature in the chamber, while the various levels can be time or probe managed according to needs.

### Reference

100 display graphical interface of the multiprobe system
110 probe 1
120 probe 2
130 probe 3
140 probe 4

## Claims

1. A cooking system in a multiprobe cooking equipment for food, **characterized by** the fact that within the cooking chamber, there are at least two control pins (110, 120, 130, 140), each marked, in which a first end connected the control system of cooking equipment and the second end tucked into the food to be cooked, so that the temperatures recorded by each pin (110, 120, 130, 140) are processed by said control system equipment to alert the user through the interface (100), the achievement of core temperature set for those foods, being able to cook multiple products with different firing temperatures to the heart or more of the same product, with the same cooking temperature to the heart, but of different sizes.

2. A cooking system as in claim 1 **characterized in that** are set with the control-type probe to the heart, a number of levels as there are pins (110, 120, 130, 140) connected to the system of control equipment, each individually controlled level so as to indicate for each arrival in the core temperature of the product.

3. A cooking system as in claim 2 **characterized by** the fact that the cooking equipment runs continuously in the manner and the preset temperature in the cooking chamber, while the levels can be managed at the time or alternatively with the pins (1 10, 120, 130, 140) as required.
